# EUROPEAN PATENT APPLICATION

(11) **EP 2 863 711 A2**
(43) Date of publication of application: **22.04.2015**
(21) Application number: 14159266.7
(22) Date of filing: 12.03.2014
(51) Int. Cl.: H05B 33/08

(54) **Power supply device and luminaire**

(30) Priority: 25.09.2013 JP 2013198989
(71) Applicant: Toshiba Lighting & Technology Corporation, Yokosuka-shi Kanagawa 237-8510 (JP)
(72) Inventor: Otake, Hirokazu, Kanagawa, 237-8510 (JP); Kitamura, Noriyuki, Kanagawa, 237-8510 (JP); Takahashi, Yuji, Kanagawa, 237-8510 (JP); Ishikawa, Masato, Kanagawa, 237-8510 (JP); Miura, Yohei, Kanagawa, 237-8510 (JP)
(74) Representative: Willquist, Sofia Ellinor

(57) **Abstract**

According to one embodiment, a power supply device (4, 19, 21) includes a rectifier circuit (7), a smoothing capacitor (13), and a normally on type transistor (8). The rectifier circuit (7) is configured to rectify an alternating current supplied from a voltage source (2). The smoothing capacitor (13) is charged by an output current output from the rectifier circuit (7). The normally on type transistor (8) is connected between the rectifier circuit (7) and the smoothing capacitor (13) in series and is configured to limit an output current value of the rectifier circuit (7) during a voltage input from the voltage source (2) to an output current value higher than an output current value of the rectifier circuit (7) during a steady operation.

## Description

### FIELD

Embodiments described herein relate generally to a power supply device and a luminaire.

### BACKGROUND

A power supply device that lights a light source such as an LED (light emitting diode) as a lighting device includes a rectifier circuit, a smoothing circuit, and a DC-DC converter. The rectifier circuit and the smoothing circuit convert a commercial alternating-current power supply into a direct current. The DC-DC converter converts the direct current into a desired voltage and supplies the desired voltage to the LED. Usually, a diode bridge rectifier is used for rectification. A capacitor is used for smoothing.

When the commercial alternating-current power supply is input to the power supply device, the smoothing capacitor is charged through a power switch and a rectifier. At this point, since only low-impedance elements are present in a path through which a charging current flows, a rush current, which is an excessively large charging current, flows. Consequently, for example, the rectifier is broken or a power switch contact is fused. Therefor, a function for preventing the rush current is necessary.

### BRIEF DESCRIPTION OF THE DRAWINGS

FIG. 1 is a circuit diagram illustrating a luminaire including a power supply device according to a first embodiment;
FIGS. 2A to 2E are waveform charts for describing the operation of the power supply device;
FIG. 3 is a characteristic chart showing dependency of a drain current of a normally on type transistor on the potential of a control terminal;
FIG. 4 is a circuit diagram illustrating a luminaire including a power supply device according to a second embodiment; and
FIG. 5 is a circuit diagram illustrating a luminaire including a power supply device according to a third embodiment.

### DETAILED DESCRIPTION

In general, according to one embodiment, a power supply device includes a rectifier circuit, a smoothing capacitor, and a normally on type transistor. The rectifier circuit is configured to rectify an alternating current supplied from a voltage source. The smoothing capacitor is charged by an output current output from the rectifier circuit. The normally on type transistor is connected between the rectifier circuit and the smoothing capacitor in series and is configured to limit an output current value of the rectifier circuit during a voltage input from the voltage source to an output current value higher than an output current value of the rectifier circuit during a steady operation.

According to another embodiment, there is provided a luminaire including a power supply device and a lighting device. The power supply device includes a rectifier circuit, a smoothing capacitor, and a normally on type transistor. The rectifier circuit rectifies an alternating current supplied from a voltage source. The smoothing capacitor is charged by an output current output from the rectifier circuit. The normally on type transistor is connected in series between the rectifier circuit and the smoothing capacitor and limits an output current value of the rectifier circuit during a voltage input from the voltage source to an output current value higher than an output current value of the rectifier circuit during a steady operation. The lighting device is supplied with electric power from the power supply device.

Various embodiments will be described hereinafter with reference to the accompanying drawings. In the following explanation, the same members are denoted by the same reference numerals and signs. Explanation of the members once described is omitted as appropriate.

### First Embodiment

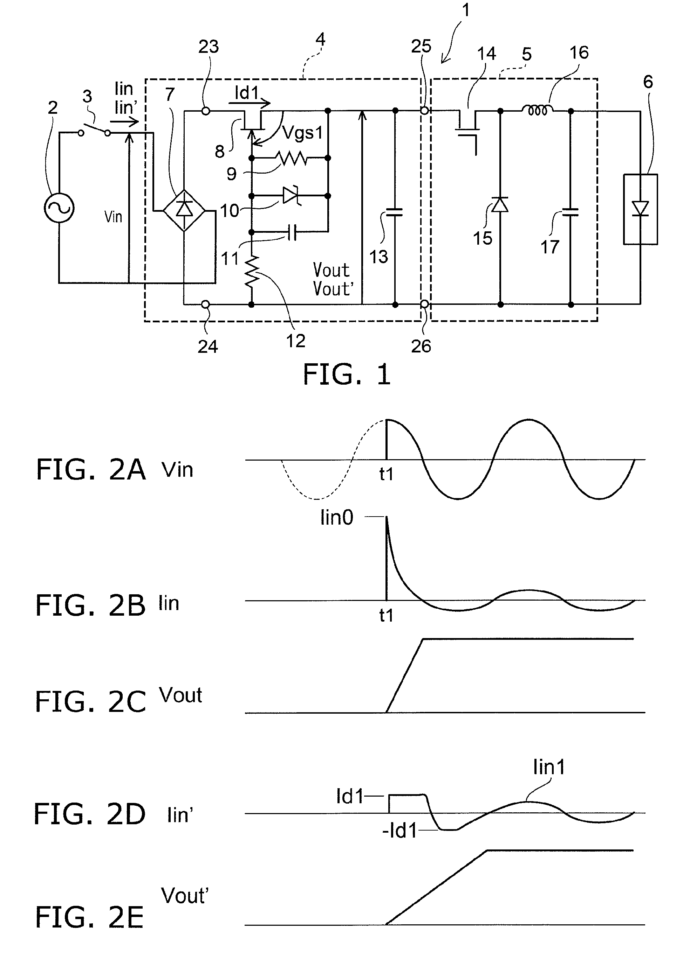

FIG. 1 is a circuit diagram illustrating a luminaire including a power supply device according to a first embodiment.

A luminaire 1 includes a power supply device 4, a DC-DC converter 5, and a lighting load 6.

The power supply device 4 applies rectification and smoothing to an alternating-current power supply voltage input via a power switch 3. The DC-DC converter 5 converts an output of the power supply device 4 into a desired voltage and supplies the desired voltage to the lighting load 6.

The lighting load 6 includes an illumination light source such as a light-emitting diode (LED). An alternating-current power supply 2 (a voltage source) is, for example, a commercial power supply.

The power supply device 4 includes a rectifier 7 (a rectifier circuit), a normally on type transistor 8, a smoothing capacitor 13, resistors 9 and 12, a constant voltage diode 10, and a capacitor 11. The rectifier 7 is, for example, a diode bridge rectifier. The normally on type transistor 8 is a high electron mobility transistor (HEMT) formed by a nitride semiconductor such as gallium nitride (GaN).

In this specification, the "nitride semiconductor" includes semiconductors having all compositions obtained by changing composition ratios x, y, and z within ranges of the composition ratios in a chemical formula BxInyAlzGa 1-x-y-zN (0≤x≤1, 0≤y≤1, 0≤z≤1, x+y+z≤1). Further, semiconductors further including group V elements other than N (nitride), semiconductors further including various elements added to control various physical properties such as a conduction type, and semiconductors further including unintentionally-included various elements are also included in the "nitride semiconductor".

Two input terminals of the rectifier 7 are input terminals of the power supply device 4 as well. The input terminals are connected to the alternating-current power supply 2 via the switch 3. A drain (a first main terminal) of the normally on type transistor 8 is connected to a high-potential output terminal 23 of the rectifier 7. A source (a second main terminal) of the normally on type transistor 8 is connected to one end of the smoothing capacitor 13. The other end of the smoothing capacitor 13 is connected to a low-potential output terminal 24 of the rectifier 7. The resistor 9 and the capacitor 11 connected in parallel are connected between a gate and the source of the normally on type transistor 8. An anode of the constant voltage diode 10 is connected to the gate of the normally on type transistor 8. A cathode of the constant voltage diode 10 is connected to the source of the normally on type transistor 8. The gate (a control terminal) of the normally on type transistor 8 is connected to the low-potential output terminal 24 of the rectifier 7 via the resistor 12. An output of the power supply device 4 is extracted from both ends of the smoothing capacitor 13.

The operation of the power supply device 4 is described with reference to FIGS. 2A to 2E.

FIGS. 2A to 2E are waveform charts for describing the operation of the power supply device 4.

FIG. 2A is a waveform chart showing an input voltage Vin of the power supply device 4. FIG. 2B is a waveform chart showing an input current Iin of the power supply device 4. FIG. 2C is a waveform chart showing a voltage Vout of the smoothing capacitor 13. FIG. 2D is a waveform chart showing an input current Iin' of the power supply device 4. FIG. 2E is a waveform chart showing a voltage Vout' of the smoothing capacitor 13.

First, a configuration is described in which the normally on type transistor 8 is absent and the rectifier 7 is directly connected to the smoothing capacitor 13. When the power switch 3 is turned on, an alternating-current voltage is applied to the power supply device 4. The smoothing capacitor 13 is charged through the power switch 3 and the rectifier 7. Immediately after the power switch 3 is turned on, since the smoothing capacitor 13 is not charged, a voltage between terminals of the smoothing capacitor 13 is 0 V. When the power switch 3 is turned on at timing when an input alternating-current voltage is close to a peak value as indicated by t1 of FIG. 2B, a relatively high voltage is applied to the power switch 3, the rectifier 7, and a not-shown wiring impedance. Since the impedances of the power switch 3, the rectifier 7, and the wiring impedance are low, a charging current of the smoothing capacitor 13, that is, a rush current has a relatively large value as indicated by Iin0 in FIG. 2B. Therefore, problems such as breakage of the rectifier 7 and fusing of the contact of the power switch 3 occur.

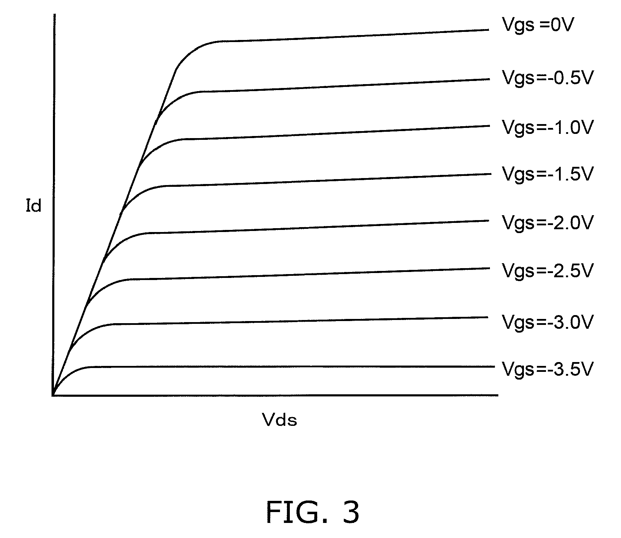

In order to prevent these problems, the normally on type transistor 8 is connected to the power supply device 4. The normally on type transistor formed by the nitride semiconductor has a voltage-current characteristic shown in FIG. 3.

FIG. 3 is a characteristic chart showing dependency of a drain current of the normally on type transistor 8 with respect to the potential of the control terminal. The abscissa of FIG. 3 indicates a drain-to-source voltage and the ordinate indicates a drain current.

As it is seen from FIG. 3, When a drain current Id reaches a predetermined current value, ON resistance of the normally on type transistor 8 rises. That is, the normally on type transistor 8 shows a constant current characteristic. The drain current Id in a state in which the normally on type transistor 8 shows the constant current characteristic depends on a gate-to-source voltage Vgs. As an absolute value of the gate-to-source voltage Vgs is larger, a value of the drain current Id in the constant current characteristic is smaller.

The normally on type transistor 8 having such characteristics is connected between the rectifier 7 and the smoothing capacitor 13. A voltage obtained by dividing the voltage Vout by the resistors 9 and 12 is applied between the gate and the source of the normally on type transistor 8. In the embodiment shown in FIG. 3, the voltage between the gate and the source of the normally on type transistor 8 is limited to a predetermined voltage by the constant voltage diode 10. The voltage has negative polarity in the gate with respect to the source. The voltage is represented as Vgs1 and a constant current value corresponding to the voltage Vgs1 in FIG. 3 is represented as Id1. As shown in FIG. 2C, when the power switch 3 is turned on and the input current Iin' increases and reaches the constant current value Id1, the normally on type transistor 8 shifts to a high-impedance region described above concerning FIG. 3. As shown in FIG. 2C, the input current Iin' is limited to the constant current value Id1 by a constant current action. This state is represented by Iin' and Vout' in FIGS. 2C and 2D. The input current Iin' after the smoothing capacitor 13 is charged and reaches a voltage at stationary time is represented by Iin1 in FIG. 2D. This is equivalent to an input current of the power supply device 4 during a normal operation. The constant current value Id1 is set to a high value with respect to the input current Iin1. This is for the purpose of reducing a loss in the normally on type transistor 8 during the normal operation.

In the embodiment, the voltage Vgs1 can be set to an arbitrary value by the resistors 9 and 12 and the constant voltage diode 10. The capacitor 11 is a capacitor for malfunction prevention and is a capacitor having a relatively small capacity. After the power switch 3 is turned off, the capacitor 11 is promptly discharged. Therefore, even if the power switch 3 is turned on again, the current limiting function is not prevented.

The DC-DC converter 5 illustrated in FIG. 1 includes a switching element 14, a rectifying element 15, an inductor 16, a capacitor 17, and a not-shown control circuit. The switching element 14 is, for example, a MOSFET (Metal-Oxide-Semiconductor Field Effect Transistor). The rectifying element 15 is, for example, a silicon diode.

A drain of the switching element 14 is connected to a high-potential output terminal 25 of the power supply device 4. A source of the switching element 14 is connected to a cathode of the rectifying element 15. An anode of the rectifying element 15 is connected to a low-potential output terminal 26 of the power supply device 4. The inductor 16 and the capacitor 17 connected in series are connected to the rectifying element 15 in parallel. An output of the DC-DC converter 5 is extracted from both ends of the capacitor 17 and supplied to the lighting load 6.

The operation of the DC-DC converter 5 in the embodiment is equivalent to the operation of a normal falling voltage converter. The switching element 14 is subjected to ON/Off control by the control circuit. A voltage output from the power supply device 4 is converted into a voltage necessary for the lighting load 6. The DC-DC converter 5 in the embodiment may be a rising voltage type or a rising-falling voltage type.

Effects of the first embodiment are described.

According to the embodiment, an input current immediately after the power switch 3 is turned on is limited to the constant current value Id1 by the action of the normally on type transistor 8. As a result, an effect is obtained that an excessively large rush current does not flow and breakage of the rectifier and the power switch can be prevented. An effect is also obtained that it is possible to change constants of the resistors 9 and 12 and the constant voltage diode 10 and set a rush current to an arbitrary rush current in a range not exceeding a maximum current of the normally on type transistor 8.

### Second Embodiment

A second embodiment is described.

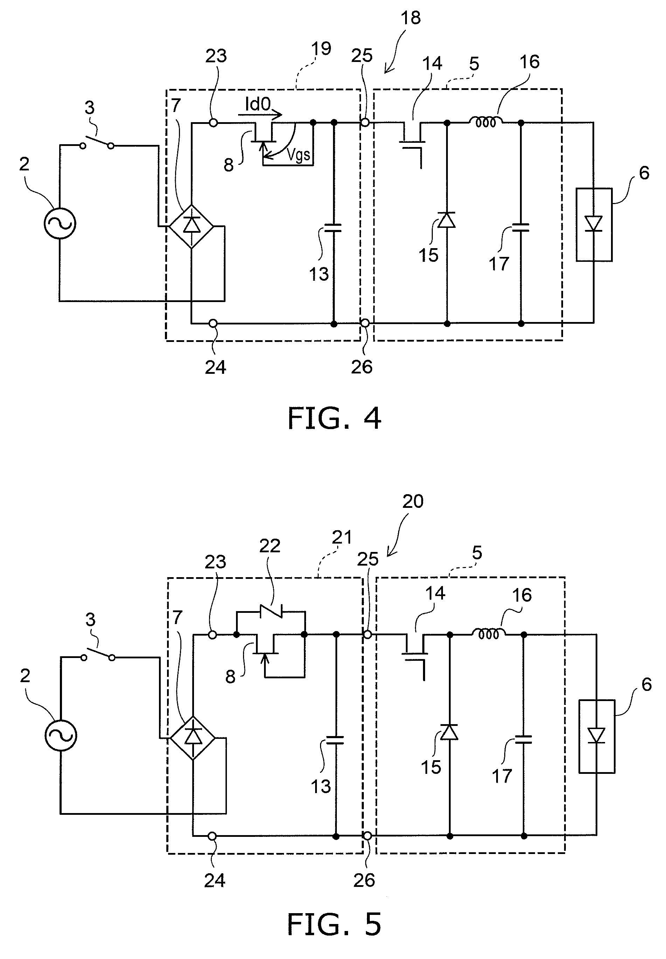

FIG. 4 is a circuit diagram illustrating a luminaire including a power supply device according to the second embodiment.

A luminaire 18 shown in FIG. 4 includes a power supply device 19, the DC-DC converter 5, and the lighting load 6.

The power supply device 19 includes the rectifier 7, the normally on type transistor 8, and the smoothing capacitor 13.

The drain of the normally on type transistor 8 is connected to the high-potential output terminal 23 of the rectifier 7. One end of the smoothing capacitor 13 is connected to the source of the normally on type transistor 8. The other end of the smoothing capacitor 13 is connected to the low-potential output terminal 24 of the rectifier 7. The gate of the normally on type transistor 8 is connected to the source of the normally on type transistor 8. An output of the power supply device 19 is extracted from both ends of the smoothing capacitor 13.

The operation of the power supply device 19 is described. Since the gate and the source of the normally on type transistor 8 are directly connected, the gate-to-source voltage Vgs is 0 V. In FIG. 3, when the drain current Id in a constant current characteristic at the time of Vgs=0V is represented as Id0, a drain current of the normally on type transistor 8 is limited to the drain current Id0. Therefore, a rush current is also limited to a value of the drain current Id0.

Effects of the second embodiment are described.

According to the embodiment, as in the first embodiment, an effect is obtained that an excessively large rush current does not flow and breakage of the rectifier and the power switch can be prevented. However, unlike the embodiment shown in FIG. 1, a rush current cannot be set to an arbitrary rush current.

### Third Embodiment

A third embodiment is described.

FIG. 5 is a circuit diagram illustrating a luminaire including a power supply device according to the third embodiment.

A luminaire 20 shown in FIG. 5 includes a power supply device 21, the DC-DC converter 5, and the lighting load 6.

The power supply device 21 includes the rectifier 7, the normally on type transistor 8, the smoothing capacitor 13, and an overvoltage protection element 22.

The drain of the normally on type transistor 8 is connected to the high-potential output terminal 23 of the rectifier 7. The source of the normally on type transistor 8 is connected to one end of the smoothing capacitor 13. The other end of the smoothing capacitor 13 is connected to the low-potential output terminal 24 of the rectifier 7. The gate of the normally on type transistor 8 is connected to the source of the normally on type transistor 8. The overvoltage protection element 22 is connected between the drain and the source of the normally on type transistor 8. An output of the power supply device 21 is extracted from both ends of the smoothing capacitor 13.

The operation of the power supply device 21 is described.

As described with reference to FIG. 3, the normally on type transistor 8 shows the constant current characteristic and changes to a high-impedance state. When an unintended excessively large voltage such as a lightening surge is applied to the normally on type transistor 8, it is likely that the drain-to-source voltage rises and the normally on type transistor 8 is broken. To prevent this problem, the overvoltage protection element 22 is connected between the drain and the source of the normally on type transistor 8. Otherwise, the operation is the same as the operation in the second embodiment.

Effects of the third embodiment are described.

According to the embodiment, as in the first embodiment, an effect is obtained that an excessively large rush current does not flow and breakage of the rectifier and the power switch can be prevented. An effect is also obtained that, even when an overvoltage such as a lightening surge is applied, the normally on type transistor is protected and reliability is improved.

The embodiments are described above with reference to the specific examples. However, the embodiments are not limited to the specific examples and various modifications of the embodiments are possible.

For example, the normally on type transistor is not limited to the GaN-based HEMT. For example, the normally on type transistor may be a semiconductor device formed by using a semiconductor having a wide band gap (a wide band gap semiconductor) such as silicon carbide (SiC), gallium nitride (GaN), or diamond as a semiconductor substrate. The wide band gap semiconductor means a semiconductor having a band gap wider than a band gap of gallium arsenide (GaAs) having the band gap of about 1.4 eV. The wide band gap semiconductor includes, for example, a semiconductor having a band gap equal to or wider than 1.5 eV, gallium phosphate (GaP having band gap of about 2.3 eV), gallium nitride (GaN having a band gap of about 3.4 eV), diamond (C having a band gap of about 5.27 eV), aluminum nitride (AlN having a band gap of about 5.9 eV), and silicon carbide (SiC).

The lighting load 6 is not limited to LED and may be, for example, an organic EL (Electro-Luminescence) or an OLED (Organic light-emitting diode).

The embodiments are described above with reference to the specific examples. However, the embodiments are not limited to the specific examples. That is, examples obtained by those skilled in the art applying design changes to the specific examples are also included in the scope of the embodiments as long as the examples include the characteristics of the embodiments. The components and the arrangement, the materials, the conditions, the shapes, the sizes, and the like of the components included in the specific examples are not limited to those illustrated in the figures and can be changed as appropriate.

The components included in the embodiments can be combined as long as the combination is technically possible. Components obtained by combining the components are also included in the scope of the embodiments as long as the components include the characteristics of the embodiments. Besides, in the category of the idea of the embodiments, those skilled in the art can conceive various modifications and alterations. It is understood that the modifications and the alternations also belong to the scope of the embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (4, 19, 21) comprising:
a rectifier circuit (7) configured to rectify an alternating current supplied from a voltage source (2);
a smoothing capacitor (13) charged by an output current output from the rectifier circuit (7); and
a normally on type transistor (8) connected between the rectifier circuit (7) and the smoothing capacitor (13) in series and configured to limit an output current value of the rectifier circuit (7) during a voltage input from the voltage source (2) to an output current value higher than an output current value of the rectifier circuit (7) during a steady operation.

2. The device (21) according to claim 1, further comprising an overvoltage protection element (22) connected to the normally on type transistor (8) in parallel and configured to limit a voltage value to a protection voltage higher than a maximum voltage of the voltage source (2).

3. The device (4, 19, 21) according to claim 1 or 2, wherein the normally on type transistor (8) includes a nitride semiconductor.

4. A luminaire (1, 18, 20) comprising:
the power supply device (4, 19, 21) according to any one of claims 1 to 3; and
a lighting device (6) supplied with electric power from the power supply device (4, 19, 21).
